# EUROPEAN PATENT SPECIFICATION

(11) **EP 2 030 666 B1**
(45) Date of publication and mention of the grant of the patent: **11.05.2011**
(21) Application number: 08005601.3
(22) Date of filing: 26.03.2008
(51) Int. Cl.: B01D 46/06, B01D 46/00

(54) **Bag-filter filtering unit with replaceable filtering modules for combustion plants**
Beutelfilter-Filtereinheit mit auswechselbaren Filtermodulen für Verbrennungsanlagen
Unité de filtrage de filtre à sac avec modules de filtrage remplaçables pour installations de combustion

(30) Priority: 28.08.2007 IT UD20070147
(43) Date of publication of application: 04.03.2009
(73) Proprietor: GEM-MATTHEWS INTERNATIONAL S.r.l., 33100 Udine (IT)
(72) Inventor: Giust, Fabrizio, 34070 Fogliano di Redipuglia (GO) (IT)
(74) Representative: Gotra, Stefano

(56) References cited:
- AU-B2- 540 678
- BE-A3- 1 008 278
- DE-A1- 2 827 926
- DE-A1- 3 202 227
- US-A- 2 607 436
- US-A- 4 158 554

## Description

### Technical Field

This invention generally relates to the application field of bag filters for particulate purification of fumes or gases as defined in the pre-characterizing part of claim 1.
Purification and filtering plants including this type of filter form part of this invention.
Combustion and cremation furnaces with said filters are also object of this invention.

### Background Art

In the field of the realization of filters for particulate purification of fumes or gases recourse to cylindrical pockets called bags is well known.
The motion of the fumes or gases to be purified is generally ensured by a fan which forces the passage of said fumes or gas through the walls of a series of bags.

Said bags are realised with fabric and treated with materials able to supply permeability which lets the gas pass but not the particulate present.
The particulate partly decants because of the speed loss of the fumes due to the cyclonic effect and partly adheres to the wall of the bag.
Shaking, backflushing or high-pressure compressed air injection systems allow for the periodic removal of the particulate from the wall of the bags for the following operations of gathering and disposal.

In particular, for the filters with compressed air injection cleaning system, the bags are closed at the bottom, open on the top and internally reinforced with a metallic framework, or rather, cage.
The air to be filtered crosses the bag sideways from the outside inwardly directed, goes up the bag internally and exits from the opening situated on the top of said bag.
The particulate, instead, deposits on the external surface of said bag.

The cleaning of filtering bags provides for the injection of a blast of compressed air by means of nozzles situated at the exit of the air filtered by the bag.

Said blast of compressed air causes a pressure wave that shakes the filtering material constituting the bag pulverising the dust layer accumulated and causing it to fall toward the bottom, where it is usually conveyed by a hopper towards removable accumulation containers.

This operation lasts a few seconds and usually involves only one row of bags at a time, letting the other ones continue to work without stopping the operative cycle.

Usually, the compressed air is injected by means of a Venturi tube which chokes at the exit causing a pressure reduction that withdraws clean air from the adjacent bags not submitted to the treatment, improving the efficiency of the air blast.

A controller operates the compressed air blast opening electro-valves and checks the washing cycle determining both the injection duration and the frequency timing.

The characteristics of the bags are specifically conceived depending on the fumes to filter according to temperature, percentage of oxygen, presence of acid compounds, sizes and characteristics of the particulate, etc.

More bags, in variable number depending on the flow rate of the air to be filtered, are generally mounted on two rows to constitute a filtering group internally to a filtering chamber.
The plant is in turn generally composed of several filtering chambers forming compartments.

For variable operative average periods between 10 thousand and 16 thousand hours of continuative working, maintenance interventions periodically provides for the replacement of the filtering bags and/or corresponding cages accessing to the filtering group by means of inspection doors situated on the top or on the side of the chambers in which they are installed.
The intervention is manually carried out on each bag constituting the filtering group of the chamber.

### Technical problems of the state of the art

The greater disadvantages of said solutions are:
- high ratio between space used and filtering surface;
- replacement of bags and/or corresponding cages individually with the consequence of the plant being out of use for a long time;
- bag damage risks during the insertion operation;
- replacement operation requiring the manual extraction of the cage and the following manual removal of the bag;
- the operators being in contact with a dirty environment which is potentially dangerous to health because of dusty residues present on the bags usually considered as dangerous waste;
- requirement of adopting onerous checking procedures.

### The invention's aim

This invention provides for the realization of a removable filtering module in its entirety with high ratio between filtering surface and space taken up to allow for the application of filtering systems also where space problems exist.

### Concept of the invention

The aim is achieved with the characteristics of the main claim.
The sub-claims represent advantageous solutions.

### Advantageous effects of the invention

The advantages obtained with this invention are:
- the ratio between space taken up and filtering surface is lower compared to state of the art systems; that is, with an equal filtering surface the space taken up is definitely lower;
- maintenance/replacement time particularly brief;
- the need to operate on single filtering elements is eliminated, limiting in this way the exposure of the operators to a potentially dangerous environment;
- the bag damage risk is reduced because the insertion is easily carried out outside the filter;
- it allows for the use of less onerous checking procedures;
- it simplifies the disposal of damaged and/or exhausted materials.

### Description of the drawings

With reference to the included drawings the solution is afterwards described, generally applicable to the bag filters for particulate purification of fumes or gases in the particular realization of a filter for cremation furnaces to be considered as non limitative example of this invention in which:

Figure 1 is a 3-dimensional view of the filtering module (1) where it is possible to see:
· The supporting structure (2) composed by upper flange (3) provided with ledge profile, side sections (4), lower flange (5), tubular stocks (6);
· filtering bags (7) that are fixed to the upper flange (3) by means of grooves (12) present on said bags;
· cages (8);
· gasket (9).

Figure 2 is a 3-dimensional view of the supporting structure (2) only, where some of the above-mentioned components are identifiable and where it is possible to find also the upper seat (10) and the lower seat (11) for inserting the filtering bags and corresponding cages.

Figure 3 is a side-view of one of the bags (7) where it is possible find the separating septum (18) of the two ducts (19).

Figure 4 is a view of one of the bags (7) according to the point of view indicated with B in figure 3, where it is possible to find the separating septum (18) of the two ducts (19).

Figure 5 is an enlargement of the bag portion indicated with (A) in figure 1 where the groove(12) present on the upper portion of the bag is indicated.

Figure 6 is a 3-dimensional view of the cage (8) where it is possible to see the rods (13) and the distance rings (14) forming said cage.

Figure 7 is an enlargement of the upper portion of the cage (8) of figure 1 where some of the above-described components are identifiable and where it is possible to find also the upper hooks (15) and the upper band (16).

Figure 8 is an enlargement of the lower portion of the cage (8) of figure 1 where some of the above-described components are identifiable and where it is possible to find also the bottom (17) of the cage.

Figure 9 is a 3-dimensional view that illustrates the fixing principle by means of elastic rings or "snap rings" (27).

Figure 10 illustrates the fixing sequence of the Venturi tube (28) on the upper flange (3) at the bag (7).

Figure 11 shows the Venturi tube (28) fixed on the upper flange (3).

Figure 12 is a plan view of a filtering group with the Venturi tubes (28) fixed on the upper flange (3).

Figure 13 illustrates the air blast (29) designed for the bag (7)cleaning that enters the Venturi tube (28) fixed on the upper flange (3) from the top.

Figure 14 represents one possible alternative to the bags shaped as for figure 3, an alternative in which each filter element corresponding to the solution of figure 3 is made out of two constructively separated bags, each realizing a duct (19) and adjacent rather than being a single component forming two ducts separated by a central septum.

Figure 15 is a view of one of the bags (7) according to the point of view indicated with C in figure 14, where it is possible to find the two ducts (19).

Figure 16 illustrates the assembly sequence of the filtering module (1) inside the filtering plant (20) by means of the five contained tables A, B, C, D, E. More in detail:
- in table A some filtering modules (1) are still external to the filtering plant (20);
- in tables B and C, of which C is a view according to the point of view indicated with F in table B, the filtering modules (1) are partially inserted in the filtering plant (20) and it is possible to find the upper flange (3) on which the sealing gasket (9), designed to link to sealing counter-plate (25), is present;
- in tables D and E, of which E is a side-view of the plant represented in table D, the filtering module (1) completely inserted in the filtering plant (20), the gasket (9) below the upper flange (3) is in abutment on the sealing counter-plate (25). Moreover on the filtering plant also other components such as conveying hoppers (21), the accumulation containers (22), the entrance (23) for the air to be filtered, the exit (26) of the filtered air, the plenum chamber (26) acting as container for compressed air to be sent to the Venturi tubes for automatic cleaning of the bags are indicated.

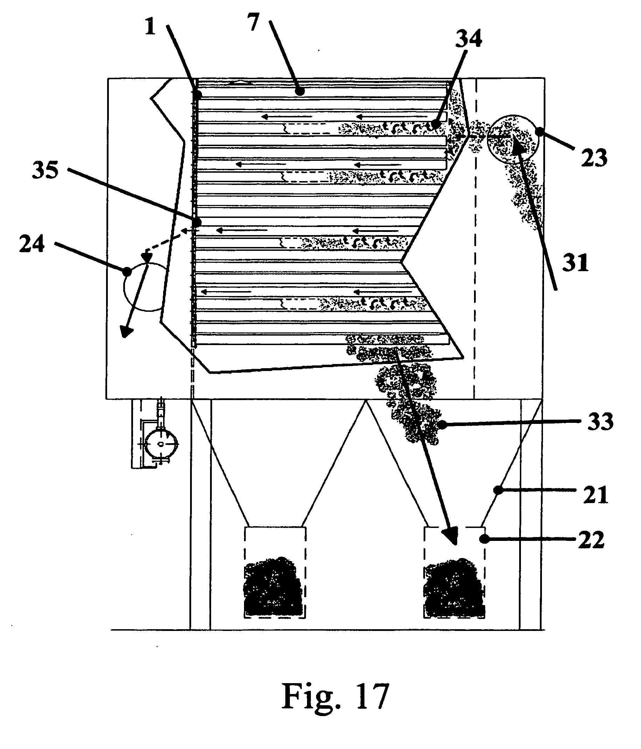

Figure 17 illustrates the path of the air inside the filtering plant and the air to be filtered (31) at the entrance (23), the filtering modules (1) each with bags (7), the zone where the filtering (34) occurs, the exiting (32) filtered air at the exit (24), the zone where the particulate (33), that is successively collected in the containers (22) through the hoppers (21), falls are identifiable.

### Detailed description of the invention with reference to the figures

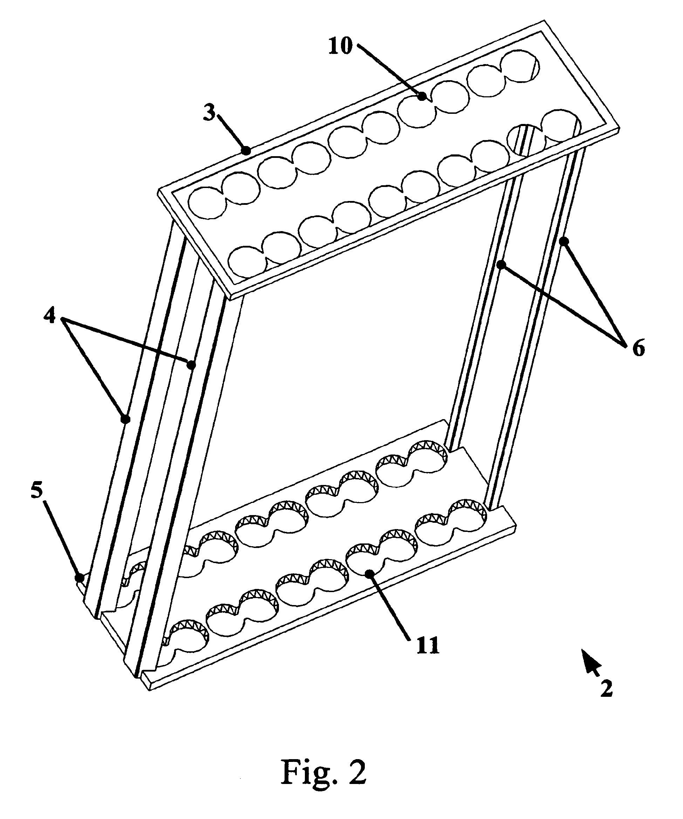

Referring to figure 2, the supporting structure (2) of the bags of the filtering module consists of an upper flange (3) and a lower flange (5) joined and spaced by means of two side sections (4) on one side and two tubular stocks (6) on the opposite side.

On said lower (5) and upper (3) flanges, there is an upper seat (10) and a lower seat (11) for each filtering bag, said seats being subdivided in two parallel rows.

Each of said seats is made of a couple of circular holes having the same diameter between them, said seat assuming a shape similar to an 8 without central septum.

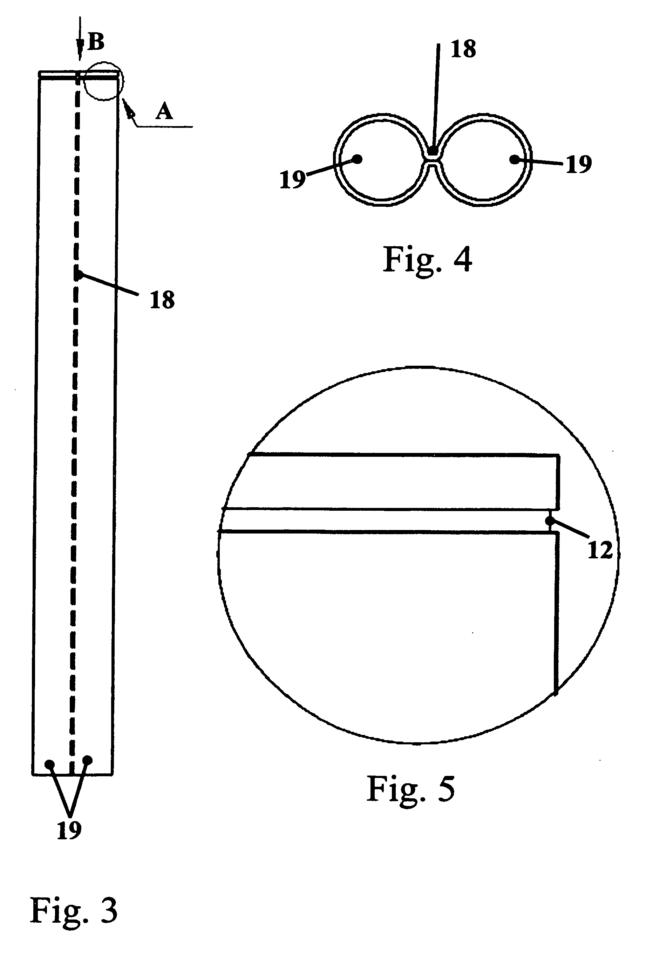

Referring to figures 3 and 4, of which figure 4 is a view according to the point of view indicated with B in figure 3, said bag (7) consists of a single pipe of filtering fabric on which two or more seams run longitudinally along the whole length, said seams being suitable to constitute a central septum (18) that separates two cylindrical adjacent ducts (19) having the same diameter so that said bag assumes a shape similar to an 8.

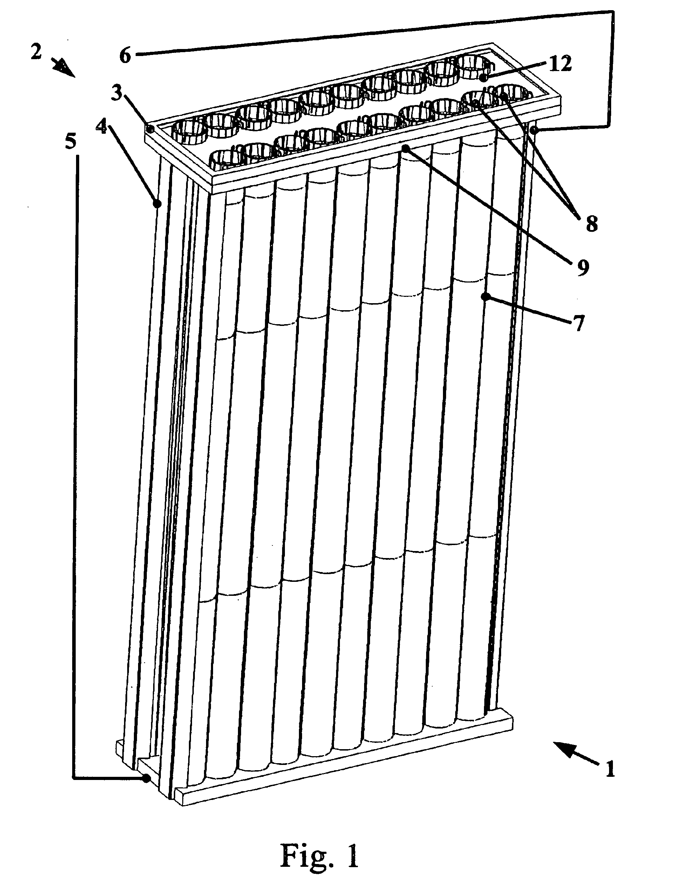

Referring to figure 5, that is an enlargement of the bag portion indicated with (A) in figure 1, on the upper portion of said bag (7) there is a groove (12), said groove being suitable to constitute the seat for the joint internal to the upper seat (10) of the upper flange (3), the overall dimensions of the bag being such that the bag can be inserted with interference internal to the lower (11) and upper (10) seats respectively on the lower (4) and upper (3) flange.

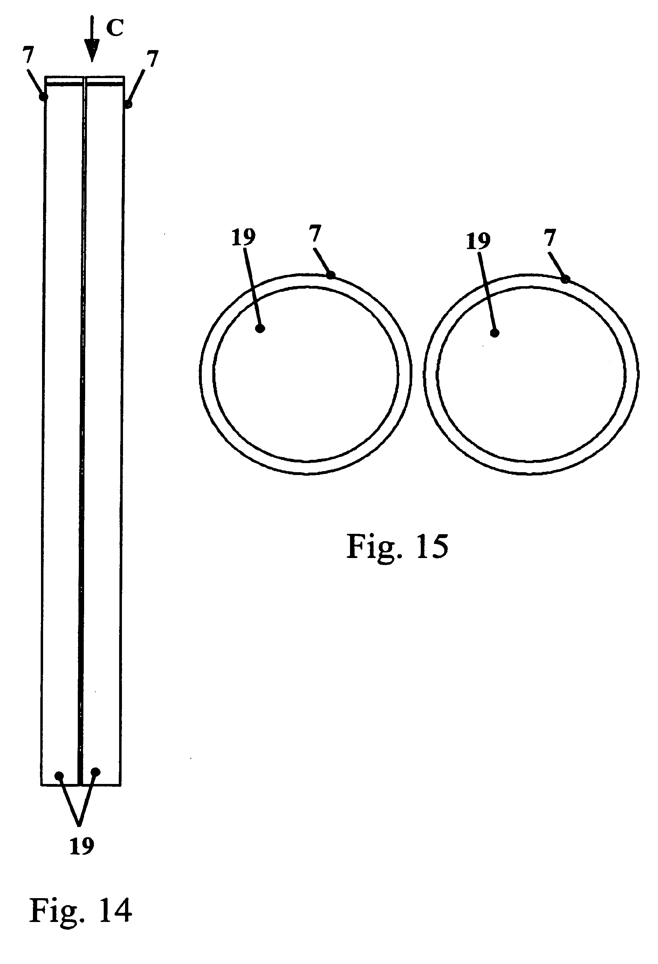

An equivalent solution provides for the recourse to two bags constructively separated and adjacent shaped as illustrated in figure 15 that is an enlarged view according to the point of view indicated with C in figure 14 where it is possible to find two bags (7) suitable for realizing the two filtering ducts (19).

Both the described solutions, with 8-shaped bag and with two different bags shaped to be inserted in the corresponding upper seat (10) and lower seat (11) respectively obtained on lower (5) and upper (3) flange, allow for the obtainment of a double filtering surface with an equal occupied space optimizing the ratio between the volume required for the installation and the filtering surface.

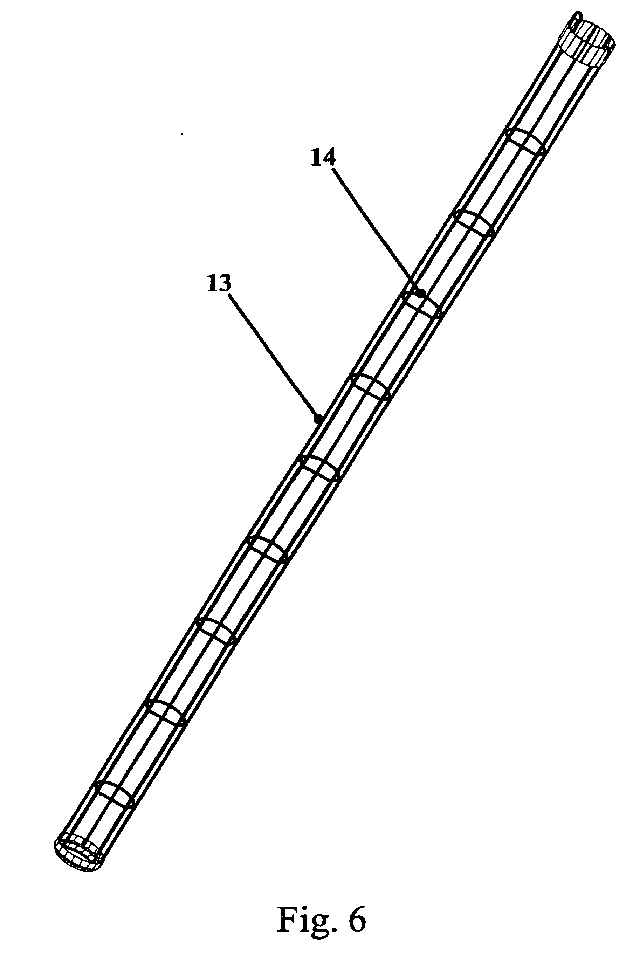

Referring to figure 6, the cage (8) able to be inserted in said bag (7) consists of a series of metallic rods (13) situated on a circumference with diameter smaller than the diameter of the bag (7), said rods being reinforced, in order to avoid deformation, by means of distance rings (14) situated with regulate intervals along the entire length of said cage. Said cage is generally made of electro-welded metallic wire.

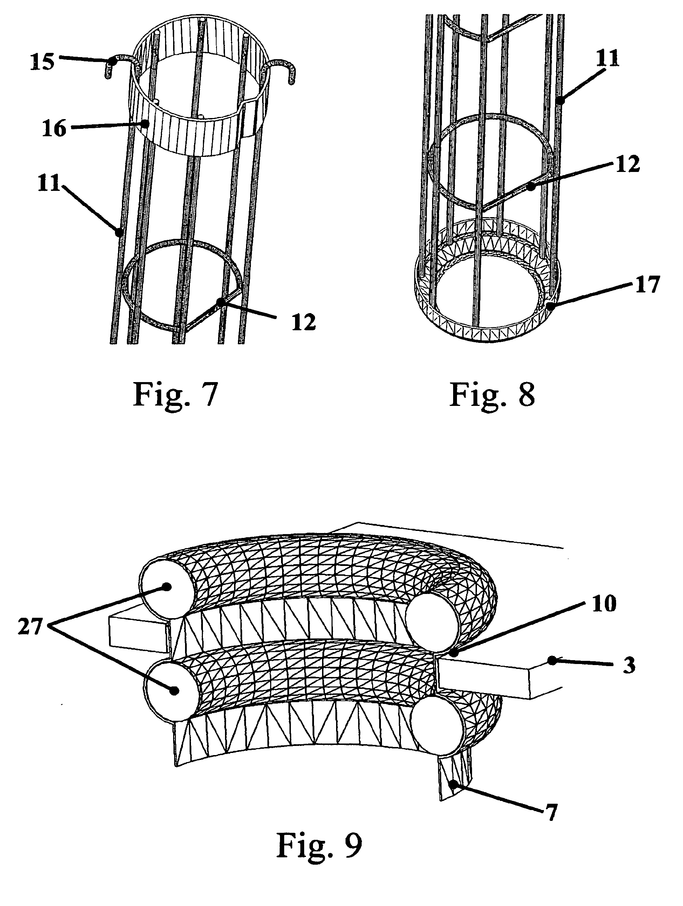

Referring to figure 7, the upper part of the cage has a metallic band (16) suitable for pushing the bag (7) against the side-wall of the upper seat (10) from the inside with the purpose of:
- keeping the air outflow duct open;
- blocking said bag in a fixed position at the upper flange (3);
- constituting a sealing annulus that impedes the unfiltered air from passing in the interspaces between the bag and respective seat on said upper flange (3).

Two rods (13) in the their terminal upper side are refolded to form two hooks (15) able to constitute the reference for the ledge against the upper flange (3) for the insertion of the cage in the upper seat (10).

Referring to figure 8, the lower side of the basket has a closing metallic bottom (17) able to push the bag (7) against the side-wall of the lower seat (11) from the internal side with the purpose of:
- keeping the bag in shape;
- blocking in a fixed position said bag at the lower flange (4)
- constituting a sealing annulus that impedes the unfiltered air from passing in the interspaces between the bag and respective seat on said lower flange (4).

A preferential, alternative solution to the previously described bag blocking system provides for the recourse to a sealing system between the bag and the elastic ring or "snap ring" bag-carrying plate normally used in this typology of filters and disclosed in figure 9. Two concentrical elastic rings (27) are mounted at the top end of the bag (7) one upper axially and the other one lower, spaced at a distance corresponding roughly to the thickness of the upper flange (3).

Said elastic rings (27) have a greater internal diameter than the diameter of the seat (10) for the insertion of the bag located on the upper flange(3). The two rings are elastic in order to facilitate their deformation, facilitating the passage of one of them through the seat (10). In this way, the bag (7) is held in a fixed position on the upper flange (3) because the two elastic rings (27) are situated one above and the other below said upper flange, being unable however to easily unthread from it as their internal diameter is greater than the diameter of the seat (10) realizing a joint system.

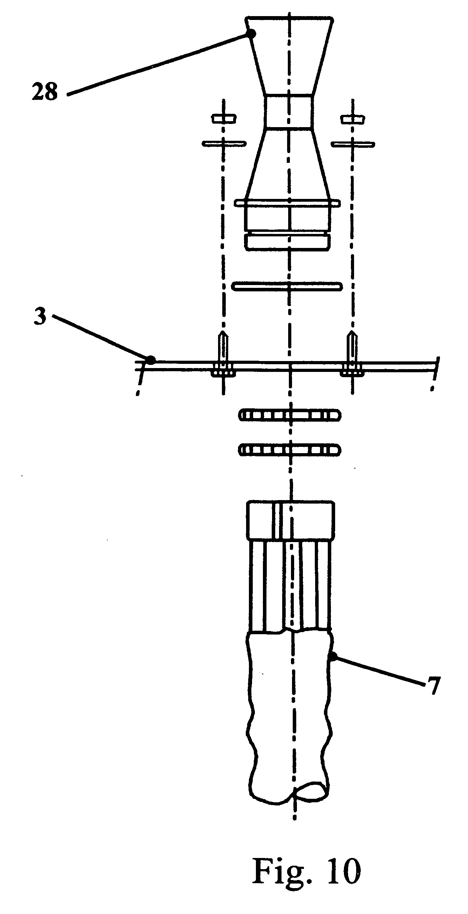

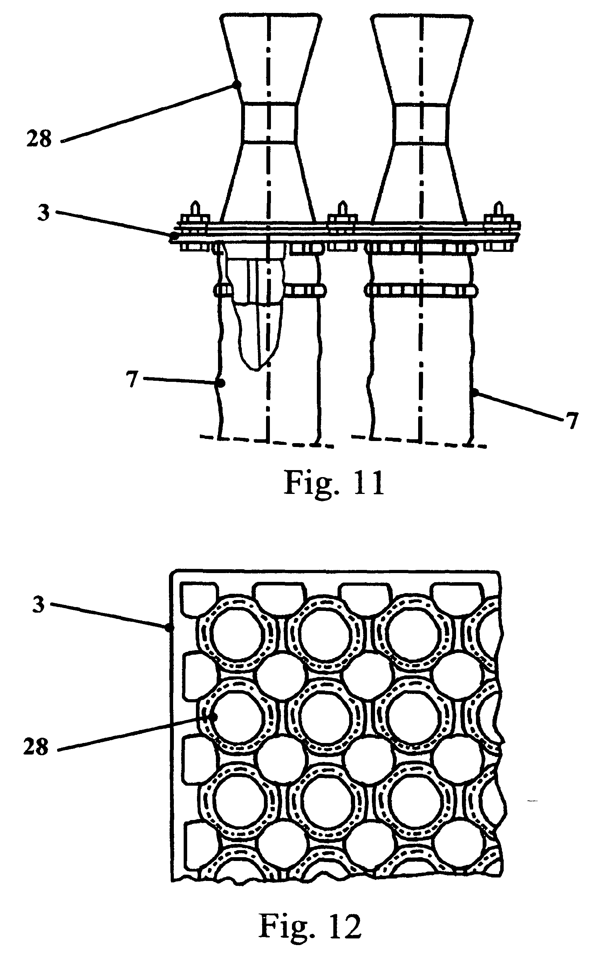

The recourse to this solution, moreover, simplifies the mounting of the Venturi tubes (28), as disclosed in figure 10 so that said Venturi tubes may penetrate the bag's inside. One of said Venturi tubes for each filtering duct made by means of the bags (7) is conveniently fixed on the upper flange (3) of the filtering module (1), as schematically disclosed in figures 11 and 12.

The function of said Venturi tubes (28) is linked to the cleaning operation of the filtering bags.

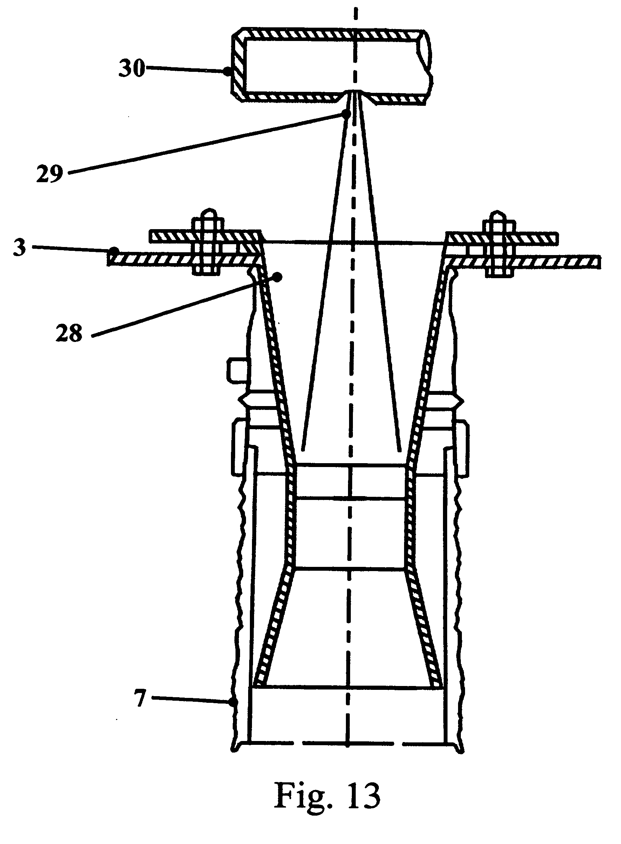

As disclosed in figure 13, a nozzle (30) placed above the upper flange (3) at said Venturi tube injects a high-pressure air blast (29) during the washing cycle. The pressure wave induced by the short but intense air blast causes a mechanical deformation of the bag's surface, causing the detachment of the particulate deposited on the external side of the bag.

The nozzles are usually subdivided in groups, each serving one row of bags and that can be operated independently from the others by means of electro-valves controlled by the electronic board controller so that the cleaning operation can also be carried out when the plant is in operation, in rotation on different groups of filtering elements.

The compressed air being introduced by means of said Venturi tube reduces pressure thus recalling clean air from the adjacent bags not submitted to the treatment, improving the efficiency of the air blast.

Since the cleaning occurs during the normal operation of the suction system without the filtering plant being halted, part of the particulate is immediately recalled on the bag by the suction system. Therefore a "post-cleaning" operation, consisting in the prolongation of the operation of the injection system also after the suction system stops, is also usually carried out. These operations are electronically controlled by a dedicated control board that controls the electro-valves for realizing the cleaning sequence and, which is furthermore able to detect the pressure variations in order to find possible escapes of dust and signal the bag row where there is anomaly.

The high-pressure air is usually introduced in the circuit through a plenum chamber that acts as a reservoir.

Other cleaning systems can be conveniently associated to the object of this invention, such as systems for shaking, backflushing or other systems of which the application is known to the sector's experts.

Referring to figure 1, the filtering module (1) is made assembling the previously described components with the addition of a gasket (9) suitable for preventing the air from passing from the lower part to the upper part of said filtering module without going through the bags (7), and means able to maintain the cages (8) in the position completely inserted in abutment on the upper flange (3).

In particular the filtering module (1) is made of the supporting structure (2), on the upper flange (3) the bags (7) with joint configuration are fixed by means of the groove (12) internal to each of these two cages (8) are inserted maintaining the bag in its shape, locking it in fixed position against the lower (4) and upper (3) flanges and forming a lower and upper sealing annulus that obliges the air to go through the lateral surface of the bag.

Said filtering module (1) constitutes a single component able to be easily and rapidly extracted in its entirety from the respective filtering chamber, reducing the plant's halting time to a minimum and facilitating at the same time the intervention of the operator that must not act manually on each bag inside the chamber during the operations for the replacement of the filtering elements so that the safety procedures can be simplified.

The disposal procedures are extremely simplified because, once the filter fabric is exhausted or damaged, the whole module is disposed of including cages and frame structure.

The shape of the bags (7) and the corresponding lower (11) and upper (10) seats respectively made on the lower (5) and upper (3) flanges allow for the obtainment of double filtering surfaces in relation to the volume taken-up making this solution particularly advantageous in cases in which the space available for the installation is limited, as in the case of cremation furnaces.

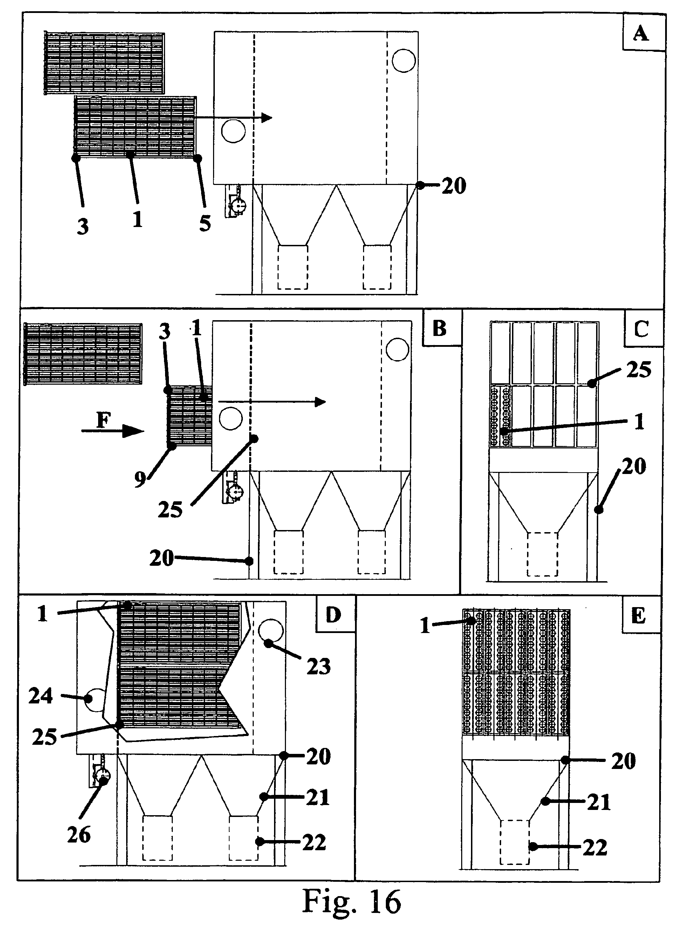

As disclosed in figure 16 one or more of said filtering modules (1) is installed internal to a filtering plant (20):
- in table A many filtering modules (1) are still external to the filtering plant (20) and they are about to be inserted with known means suitable for their movement. Said filtering modules are preferably inserted sideways internal to the filtering plant, being rotated with the lower (5) and upper (3) flanges vertically situated. In a less preferential solution said filtering modules can also be lowered from the top inside the filtering plant;
- tables B and C, of which C is a view according to the point of view indicated with F on the table B, one of the filtering modules (1) is partially inserted in the filtering plant (20) and is about to be completely inserted till when the gasket (9) present on the upper flange (3) comes into abutment with the sealing counter-plate (25) of said filtering plant (20);
- in tables D and E, of which E is a side-view of the plant represented in table D, the filtering modules (1) are completely inserted in the filtering plant (20), the gasket placed below the upper flange of each filtering module is in abutment with the sealing counter-plate (25) with suitable seats and suitable fixing means.

It is possible find, moreover, the inlet (23) of the air to be filtered to which a (not represented) delivery pipe is usually connected, the outlet (26) of the filtered air after its passage through the bags deposing the particulate on their external surface, intended to later fall down, by means of the lower hopper (21), internal to the accumulation container (22). Finally, the plenum chamber (26), acting as reservoir for compressed air to be sent to the Venturi tubes for automatic cleaning of the bags, is represented. The motion of the air is forced by means of a suction system, not represented, usually installed below the air outlet (24) of the plant (20).

Figure 17 illustrates the path of the air inside the filtering plant: the air to be filtered (31) enters through the inlet (23) by means of a duct (not represented) or grids in a different solution; the motion is generally forced by means of an aspirator situated below the filtering installation and not represented in the figure. The air to be filtered is distributed (34) inside the filtering plant and involves various of the filtering modules (1) and passes through the fabric of the bags (7) being filtered with a high efficiency factor, furthermore increased by the particulate deposits already present on the external surface of said bags (7). The filtered air therefore goes up internal to the bags and exits (35) at the upper flange and goes towards the exterior by means of the outlet duct (24). In this horizontal arrangement of the filtering modules, the powders filtered and deposited on the external surface of the bags, during the washing sequences, fall by the force of gravity, crossing the interspaces formed between the rows of bags to finish in the lower zone of the filter (33), and by means of hoppers (21) are conveyed in the removable containers (22).

In another solution, which is functionally equivalent, the particulate can be automatically transported outside by means of mechanical systems such as rotary valves, augers or other means known in to the ones skilled in art.
The previous description relates to an illustrative preferential solution of the invention and constitutes only an exemplary solution.

## Claims

1. Interchangeable bag-filtering module with internal reinforcement cage to remove the particulate conveyed by the fumes of a combustion plant **characterized in that**:
- the supporting structure (2) of said bags (7) constitutes a modules non-moveable in its entirely consisting of a carpentry (2) including an upper flange (3) and a lower flange (5) joined and spaced by means of two side sections (4) on one side and two tubular stocks (6) on the opposite side;
- on said lower (5) and upper (3) flanges for each filtering bag there is an upper seat (10) and a lower seat (11), said seats being a total even number subdivided in two parallel rows each including 5 seats for the insertion of said bags (7);
- said lower (11) and upper (10) seats are shaped in a shape that is similar to an 8 without the central septum;
- in each of said seats is/are accommodated:
i) a bag consisting of a single duct of filtering fabric on which are longitudinally made along the whole length two or more seams or junctions able to constitute a central septum (18) that separates two different cylindrical adjacent ducts (19) said bags assuming a shape remanding an 8; or
ii) two adjacent and distinct circular bags, realizing two ducts (19) the absolute equivalent of the bags shaped similarly to an 8 without the central septum.

2. Interchangeable bag-filtering module according to claim 1, **characterised in that** said bags (7) are equipped with fixing means of the elastic-ring type.

3. Filtering plant (20), **characterized in that** it comprises one or more bag-filtering modules according to any of the previous claims.

4. Filtering plant (20) according to claim 3, **characterized in that** it comprises a cleaning system provided with a high-pressure air injection system, counterflowing against the flow of the air to be filtered.

5. Filtering plant (20) according to claim 3, **characterized in that** it comprises a cleaning system provided with a mechanical bag and/or filtering module shaking system.

6. Filtering plant (20) according to claim 3, **characterized in that** it comprises a cleaning system provided with an air flow inversion system.

7. Filtering plant (20) according to any of claims 3-6 in which a series of Venturi tubes is mounted at the bags.

8. Filtering planet (20) according to any of claims 3-7 in which one or more filtering modules (1) are installed, mounted with the lower (5) and upper (3) flanges vertically situated with the replacement of the filtering modules being performer sideways to said filter or filtering plant (20) through a side access door.

9. Filtering plant (20) according to any of claims 3-8 in which one or more filtering modules (1) are installed, mounted with lower (5) and upper (3) flanges situated horizontally.

10. Filtering plant (20) according to claim claim 3, in which one or more filtering modules (1) are installed, the cleaning system uses hoppers placed below, conveying the particulate towards the collection area.

11. Filtering plant (20) according to claim 10, in which the collection area consists of metallic containers which are manually or automatically removable from the lower base of the hopper in order to be replaced once filled.

12. Combustion planet in which a filtering plant (20) according to at least one of claims 3-11 is installed.

13. Cremation furnaces with filtering plant (20) according to at least one of claims 3-11.

## Patentansprüche

1. Austauschbares Beutelfiltermodul mit internem Verstärkungskorb, um den durch den Rauch einer Verbrennungsanlage geförderten Staub zu beseitigen, **dadurch gekennzeichnet, dass**:
- die Haltestruktur (2) der genannten Beutel (7) ein in seiner Gesamtheit unbewegliches Modul darstellt, bestehend aus einer Konstruktion (2), die einen oberen Flansch (3) und einen unteren Flansch (5) umfasst, die durch zwei Seitenabschnitte (4) auf einer Seite und zwei rohrförmige Unterlagen (6) auf der anderen Seite miteinander verbunden und räumlich voneinander getrennt sind;
- sich am genannten unteren (5) und am genannten oberen (3) Flansch für jeden Filterbeutel eine obere Aufnahme (10) und eine untere Aufnahme (11) befinden, wobei die genannten Aufnahmen einer geraden Zahl entsprechen, unterteilt in zwei parallele Reihen, die jeweils 5 Aufnahmen für das Einsetzen der genannten Beutel (7) umfassen;
- die genannten unteren (11) und oberen (11) Aufnahmen so ausgebildet sind, dass ihre Form einer 8 ohne mittige Trennwand ähnelt;
- sich in jeder der genannten Aufnahmen befindet/befinden:
i) ein Beutel, bestehend aus einem einzelnen Kanal aus Filterstoff, auf dem in Längsrichtung an der gesamten Länge zwei oder mehrere Falze oder Verbindungen ausgebildet sind, die in der Lage sind, eine mittige Trennwand (18) zu bilden, die zwei unterschiedliche zylindrische aneinandergrenzende Kanäle (19) der genannten Beutel trennt und eine an eine 8 erinnernde Form annimmt;
oder
ii) zwei aneinandergrenzende und unterschiedliche kreisförmige Beutel, die zwei Kanäle (19) bilden, die absolut gleichwertig sind mit den ähnlich einer 8 geformten Beuteln ohne mittige Trennwand.

2. Austauschbares Beutelfiltermodul nach Anspruch 1, **dadurch gekennzeichnet, dass** die genannten Beutel (7) mit Befestigungsmitteln vom federnden Ringtyp ausgestattet sind.

3. Filteranlage (20), **dadurch gekennzeichnet, dass** sie ein oder mehrere Beutelfiltermodule nach irgendeinem der vorangehenden Ansprüche umfasst.

4. Filteranlage (20) nach Anspruch 3, **dadurch gekennzeichnet, dass** sie ein Reinigungssystem umfasst, das mit einem Hochdruckluftinjektionssystem ausgestattet ist, das gegen die Strömungsrichtung der zu filternden Luft strömt.

5. Filteranlage (20) nach Anspruch 3, **dadurch gekennzeichnet, dass** sie ein Reinigungssystem umfasst, das mit einem mechanischen Beutel und/oder Filtermodulrüttelsystem ausgestattet ist.

6. Filteranlage (20) nach Anspruch 3, **dadurch gekennzeichnet, dass** sie ein Reinigungssystem umfasst, das mit einem System zur Umkehrung der Luftströmung ausgestattet ist.

7. Filteranlage (20) nach irgendeinem der Ansprüche 3-6, bei der eine Reihe von Venturi-Rohren an den Beuteln montiert ist.

8. Filteranlage (20) nach irgendeinem der Ansprüche 3-7, bei der ein oder mehrere Filtermodule (1) installiert sind, wobei der untere (5) und der obere (3) Flansch vertikal positioniert sind und der Ersatz der Filtermodule seitlich zum genannten Filter oder zur genannten Filteranlage (20) durch eine seitliche Zugangstür erfolgt.

9. Filteranlage (20) nach irgendeinem der Ansprüche 3-8, bei der ein oder mehrere Filtermodule (1) installiert sind, wobei der untere (5) und der obere (3) Flansch horizontal angeordnet sind.

10. Filteranlage (20) nach Anspruch 3, bei der ein oder mehrere Filtermodule (1) installiert sind und das Reinigungssystem unten angebrachte Trichter benutzt, die den Staub zum Sammelbereich leiten.

11. Filteranlage (20) nach Anspruch 10, bei der der Sammelbereich aus Metallbehältern besteht, die von der unteren Basis des Trichters manuell oder automatisch entfernt werden können, um ersetzt zu werden, wenn sie voll sind.

12. Verbrennungsanlage, in die eine Filteranlage (20) nach mindestens einem der Ansprüche 3-11 eingebaut ist.

13. Brennöfen mit Filteranlage (20) nach mindestens einem der Ansprüche 3-11.

## Revendications

1. Module de filtrage à sac interchangeable avec cage d'armature interne pour éliminer les particules acheminées par les fumées d'une installation de combustion, **caractérisé en ce que** :
- la structure de support (2) desdits sacs (7) forme un module fixe dans son intégralité, consistant en une pièce de charpente (2) avec une aile supérieure (3) et une aile inférieure (5) reliées et espacées par deux sections latérales (4) d'un côté et par deux cales tubulaires (6) de l'autre côté ;
- pour chaque sac de filtrage, lesdites ailes inférieure (5) et supérieure (3) comportent un logement supérieur (10) et un logement inférieur (11), lesdits logements étant au total un nombre pair divisé en deux rangées parallèles, comprenant chacune 5 logements pour l'introduction desdits sacs (7) ;
- lesdits logements inférieurs (11) et supérieurs (10) présentent une forme qui fait penser à un 8 sans la division centrale ;
- dans chacun desdits logements, est/sont positionné/s :
i) un sac consistant en une seule conduite faite de tissu filtrant, sur laquelle sont réalisées longitudinalement, sur toute la longueur, deux ou plusieurs coutures ou jonctions capables de former une division centrale (18), qui sépare deux différentes conduites contiguës cylindriques (19), lesdits sacs présentant une forme semblable à celle d'8 ;
ou
ii) deux sacs contigus circulaires distincts formant deux conduites (19), l'équivalent absolu des sacs dont la forme ressemble à celle d'un 8, sans la division centrale.

2. Module de filtrage à sac interchangeable selon la revendication 1, **caractérisé en ce que** lesdits sacs (7) sont munis de moyens de fixation du type anneau élastique.

3. Installation de filtrage (20), **caractérisée en ce qu'**elle comprend un ou plusieurs modules de filtrage à sac, selon l'une quelconque des revendications précédentes.

4. Installation de filtrage (20) selon la revendication 3, **caractérisée en ce qu'**elle comprend un système de nettoyage équipé d'un système d'injection d'air haute pression, à contre-courant de l'écoulement de l'air à filtrer.

5. Installation de filtrage (20) selon la revendication 3, **caractérisée en ce qu'**elle comprend un système de nettoyage équipé d'un système de vibration mécanique du sac et/ou du module de filtrage.

6. Installation de filtrage (20) selon la revendication 3, **caractérisée en ce qu'**elle comprend un système de nettoyage équipé d'un système d'inversion de l'écoulement d'air.

7. Installation de filtrage (20) selon l'une quelconque des revendications 3 à 6, dans laquelle une série de tubes Venturi sont installés sur les sacs.

8. Installation de filtrage (20) selon l'une quelconque des revendications 3 à 7, dans laquelle un ou plusieurs modules de filtrage (1) sont installés, avec les ailes inférieure (5) et supérieure (3) situées à la verticale, avec le remplacement des modules de filtrage se faisant sur le côté dudit filtre ou de ladite installation de filtrage (20) par une trappe d'accès latérale.

9. Installation de filtrage (20) selon l'une quelconque des revendications 3 à 8, dans laquelle un ou plusieurs modules de filtrage (1) sont installés, avec les ailes inférieure (5) et supérieure (3) situées à l'horizontale.

10. Installation de filtrage (20) selon la revendication 3, dans laquelle un ou plusieurs modules de filtrage (1) sont installés, le système de nettoyage utilise des trémies placées au-dessous, acheminant les particules vers la zone de collecte.

11. Installation de filtrage (20) selon la revendication 10, dans laquelle la zone de collecte consiste en des conteneurs de métal qui, une fois remplis, peuvent être retirés manuellement ou automatiquement de la base inférieure de la trémie pour être remplacés.

12. Installation de combustion dans laquelle est installée une installation de filtrage (20), selon au moins une des revendications 3 à 11.

13. Fours de crémation avec installation de filtrage (20), selon au moins une des revendications 3 à 11.
